Europäisches Patentamt

European Patent Office

Office européen des brevets

(19)

(11) **EP 1 394 689 A1**

(12) **EUROPEAN PATENT APPLICATION**

(43) Date of publication:
**03.03.2004 Bulletin 2004/10**

(51) Int Cl.$^7$: **G06F 17/18**

(21) Application number: **02019319.9**

(22) Date of filing: **29.08.2002**

| | |
|---|---|
| (84) Designated Contracting States: **AT BE BG CH CY CZ DE DK EE ES FI FR GB GR IE IT LI LU MC NL PT SE SK TR** Designated Extension States: **AL LT LV MK RO SI** | (72) Inventor: **van Harn, Emiel** **4542 NR Hoek (NL)** |
| (71) Applicant: **Schmidt + Clemens GmbH & Co. KG** **51779 Lindlar (DE)** | (74) Representative: **König, Gregor Sebastian, Dipl.-Biol. et al** **König-Szynka-von Renesse** **Patentanwälte** **Lohengrinstrasse 11** **40549 Düsseldorf (DE)** |

(54) **Method for modelling expected life of a piece of equipment in a industrial plant, method and system for performing maintenance on an industrial plant**

(57)    Method for determining the probable life of a piece of equipment in an industrial plant which uses multiple regression analysis to express an expected life in terms of variables relevant for the life. And Method for performing maintenance on an industrial plant, whereby operational data and/or design data of the industrial plant is fed into a system, which generates at least one value for an expected life of one piece of equipment of the industrial plant and whereby the piece of equipment is exchanged when the actual life equates to the predicted life or a value derived from the predicted life, whereby

- the system uses a formula of the type used in multiple regression analysis, expressing the expected life in terms of variables relevant for the life using factors of influence and
- the factors of influence are found by performing a multiple regression analysis using data collected for variables relevant for the life and the according life.

Fig. 1

EP 1 394 689 A1

**Description**

This invention relates to a method for modelling life of a piece of equipment in a furnace. More particularly, the invention relates to a method for modelling coil life in a furnace.

Coils in furnaces are known to fail after a time of usage, wherein coil failure is defined as a coil crack or a rupture. Since the end of the coil life caused by the failure as a rule does not coincide with the end of the desired use of the furnace, the coil needs to be replaced in order to further use the furnace. Especially in large chemical plants coils of considerable size are used that are very expensive. On the other hand, every day of non-operation of a furnace caused by replacement of the coil and/or waiting for a newly ordered coil to arrive is also a great loss of potential yield. Operators of furnaces are thus confronted with the question of when to buy a new coil, whether to keep this coil as a spear and when to replace the coil in use with the newly bought one. Costs could be minimized, if the exact date of coil failure could be determined. Since coil life is dependent on a multitude of influencing-parameters, most of which even vary during the coil life, such as feed rate of material fed into the furnace to be heated, a way of determining the exact date of coil failure has not yet been found. For this reason statistical methods are used to predict an expected coil life.

One statistical method used is the so-called Weibull analysis, which on some items generates a characteristic bathtub failure curve. This failure curve can be used to determine the probability of the item failing over time, giving operators an indication on when the item failure is to be expected with great probability. Because of the many failure modes possible for a coil in a furnace, the Weibull analysis has been found to be limited in its use for coil life modelling.

These problems also arise when modelling the life of other pieces of equipment in the furnace. Here also, no reliable way has been found to model the life of this piece of equipment.

It is thus an object of the current invention to provide a method for modelling life of a piece of equipment in an industrial plant, especially in a furnace, which provides a better prediction for an expected life. Furthermore it is an object of the current invention to provide a method for performing maintenance on an industrial plant and a maintenance-system which allow considerable cost reductions for operating the industrial plant.

These objects are solved by the methods and the maintenance system as defined in the independent claims. Further embodiments are defined in the dependent claims.

The inventors have realized that the influence of each of the multitude of influencing-parameters relevant for the life of a piece of equipment of an industrial plan thas, can best be found by use of multiple regression analysis. Thus a model for coil life that expresses an expected life in terms of variables relevant for the life is best found by use of an multiple regression analysis.

Multiple regression analysis is a known statistical method and shall thus not be described in detail. It is used to generate a formula of the type

$$Y = b_0 + b_1 X_1 + b_2 X_2 + \ldots + b_k X_k + E \qquad (1)$$

Where Y = value to be predicted

$b_0$ to $b_k$ = constants

$X_1$ to $X_n$ = any of all variables or functions of a few basic variables

k = maximum number of constants

E = the unexplained error.

The constants are found by the multiple regression analysis using data from already completed processes. The equation thus relates the desired value to predict directly to the variables.

Using multiple regression analysis gives the advantage of providing an equation that can take a multitude of influencing-parameters into account. The desired value to predict is thus not determined solely in its dependency on a single influencing-parameter, which has proved to be inadequate, but on many influencing-parameters. Thus the different influences parameters have on the life of a piece of equipment, such as prolongation or shortening, can all be accounted for, giving a better prediction of the life to be expected.

Advantageously the influencing-parameters that are put into the equation are pre-selected according to their correlation and their significance. Some influencing parameters or terms can correlate among each other (exact, singular or multiple linear), making the prediction model unstable, over-fitted and over-sensitive. Small random changes in data can thus cause huge unrealistic predictions. This is because the variables are not occupying all directions of the regression space. Also influencing-parameters can be non-significant. Their inclusion can give false indication of the goodness of the fit, give higher variance in the equation coefficients and increase variance in the predictions itself. Thus, using all possible influencing-parameters in a search for the best prediction possible leads to a bad or worthless prediction and is thus advantageously not performed.

Trying every combination of the influencing parameters available in the database in order to identify the combination that leads to a model with the best performance is a very time consuming process and needs very powerful hardware to be undertaken. Thus it is advantageous in order to reduce the equipment necessary for the modelling-method according to the invention to only try equations based on certain, selected combinations of variables in order to find the best model.

A first step for selecting the variable combination is obtaining information on the correlation the individual values for a single variable in the database have among each other and obtaining information on the significance of the variables on the value to be predicted. This is done by determining significance values and correlation values. Advantageously, as significance value the Prob>F value is used. The lower this value is, the more significant the influencing-parameter is. Also preferred, as correlation value the VIF-value is used. The lower the VIF value, the lower the correlation of the influencing-parameter in comparison to the other influencing-parameters. According to a special embodiment of the invention, these Prob>F values and VIF values are obtained from all influencing-parameters in their relation to the influencing-parameters that are already used in a tried equation. This helps determining, which influencing-parameter is introduced into the equation as next influencing-parameter. According to the invention, of the parameters not yet introduced into the equation, the parameter that has the lowest significance value (Prob>F), ie. the influencing-parameter that has the highest significance, and at the same time has the lowest correlation value (VIF), ie. the influencing-parameter with the lowest correlation to the parameters already in the equation (equation-parameters) is used.

At the same time, the inventors have realised, that only introducing the influencing-parameter, which at each step of generating the equation shows the lowest absolute values for the significance value and the correlation value does not necessarily lead to the best model. Accordingly, the inventors have created a way of successively introducing and excluding influencing-parameters from the equation to be generated on the basis of predetermined rules.

The multiple regression analysis, that is part of the method for modelling the life of a piece of equipment, the method for performing maintenance and is used in the maintenance-system according to the invention, uses the following steps:

a) determining a start value as first influencing-parameter,

b) generating a current equation based on the start value and thereby entering the start value as equation-parameter into the equation,

c) determining a significance value and a correlation value for each influencing-parameter with respect to the equation-parameter(s),

d) selecting as new equation-parameter the influencing-parameter with the highest significance and the lowest correlation that is not an equation-parameter and has according to a parameter-database not been used as equation-parameter in combination with the equation-parameters of the current equation,

e) replacing the current equation with a new current equation by generating the new current equation based on the equation-parameters now including the new equation-parameter by means of multiple regression analysis based on the values of the value-database,

f) recording in parameter-database the combination of influencing-parameters already used as equation-parameters and the order of introducing the equation-parameters into the current equation,

g) calculating the performance of the current equation and recording this performance with reference to the equation-parameters in the current equation in a performance-database

h) repeating the steps c) to g) until for none of the influencing-parameters that are not equation-parameters the significance is higher than a predetermined value while at the same time the correlation is lower than a predetermined value or either the significance of an equation-parameter has become lower than a predetermined value or the correlation of an equation-parameter becomes higher than a predetermined value,

i) excluding the influencing-parameter that according to the parameter-database was last selected as new equation-parameter and replacing the current equation with a new current equation by generating the new current equation based on the equation-parameters that remain after exclusion of the last selected influencing-parameter by means of multiple regression analysis based on the values of the value-database,

j) repeating the steps c) to i) until the influencing-parameter to be excluded is the start value,

k) selecting from the database the set of equation-parameters which provided the best performance and generating a final equation by use of multiple regression analysis based on these influencing-parameters and their individual values in the value-database.

Advantageously, the start value used is the intercept, ie. the mean of the values available in the database for the parameter to be modelled. The equation that uses the intercept as influencing-parameter that is introduced as equation-parameter is the most basic way of modelling life of a piece of equipment in an industrial plant, ie. setting the expected life to be equal the mean of all the life-spans that are recorded in the database.

The significance and the correlation of the available influencing parameters is advantageously determined using the Prob>F value and the VIF value, whereby a low Prob>F value shows a high significance and a low VIF value a low correlation.

In order to improve the most simple equation, this method relies upon introducing further (new) influencing-parameters as equation-parameters into the equation. However, the way of selecting new equation-parameters is made dependent on rules that prevent redundancies in calculation and unnecessary calculations, thereby advantageously reducing the calculation time necessary.

According to the first rule, no influencing-parameter is selected as new equation parameter that is already a equation parameter of the equation in its current form. Furthermore no influencing-parameter is used that has already been made basis for a previously sampled equation in combination with the equation parameters currently in the equation. This prevents redundancies that occur, when - for example - it is considered to introduce of a numbered list of influencing-parameters the third influencing-parameter into an equation that is based on the first influencing-parameter and where a combination of the third influencing-parameter and the first influencing-parameter as equation-parameters has already been sampled. In this case the third influencing-parameter would not be selected, as it would not lead to a new combination.

According to a second rule, no influencing-parameter is selected, which is insignificant and/or correlated to the equation-parameters already in the equation relative to predetermined rules. These could be that no influencing-parameter is introduced that has a Prob>F value larger than 0,05 and a VIF-value of more than 5. These predetermined values obviously being of free choice dependant on how accurate the model is desired to be. This measure prevents unnecessary calculation procedures for equations with combinations of equation-parameters that are correlated or where the introduction of a new equation-parameter does not help predicting the response.

According to a third rule, not only the best performing influencing-parameters at each step are considered to be introduced as equation-parameters, but all possibilities of introduction of influencing-parameters that satisfy the above second rule are considered and sampled. This is a particular advantage of this method, since it has been shown that only combining the best performing influencing-parameters at each stage does not lead to the best model. This includes that after an equation on the basis of the best performing influencing-parameter has been sampled, further equations are successively sampled based on the respective selection of the remaining influencing-parameters that meet the criteria of the above second rule.

The performance of the sampled equation is calculated using standard statistical methods, ie. by calculating and recording values for the whole equation for R2, RMSE, max. Prob., max. VIF, F-ratio, Prob>F, SE of the model and SE to the fit. The performance of each sampled equation is recorded in a performance-database with reference to the combination of equation-parameters that was used to obtain this performance. This allows the best performing equation to be selected after having sampled all equations that are possible according to the above rules.

Though the model-method according to the invention is described with reference to modelling life of a piece of equipment of an industrial plant, more particular to modelling coil life in a furnace, it is to be understood that this method provides good results for every variable that is to be predicted in any process using sets of values in databases. Accordingly, mention of a piece of equipment in a furnace is to be understood as representative for every variable in any process. The method according to the invention is thus not to be understood to be limited to uses in furnaces, but to be understood to be applicable in modelling any other variable, too.

The invention has been tried with good results for predicting the life of a piece of equipment in a furnace, especially for coil life and is advantageously used for this.

For cases where each influencing-parameter has a high level of significance and a low correlation, it is advantageous to start with an equation generated by multiple regression analysis that is based on all influencing-parameters and to exclude certain parameters from this equation according to specific rule. This can be done according to the following steps:

a) generating a current equation based on the all influencing-parameters and as further influencing-parameter a determined start-value as equation-parameters by means of multiple regression analysis based on the values of the value-database,

b) determining a significance value and a correlation value for each influencing-parameter with respect to the equation-parameters,

c) selecting as new unnecessary influencing-parameter the equation-parameter with the lowest significance and the highest correlation that is according to a parameter-database not an unnecessary influencing-parameter and whose removal as equation-parameter does according to a parameter-database not lead to a combination of equation-parameters that according to the parameter-database has previously been used ,

d) replacing the current equation with a new current equation by generating the new current equation based on the set of equation-parameters from which the new unnecessary influencing-parameter has been removed by means of multiple regression analysis based on the values of the value-database,

e) recording in the parameter-database the combinations of parameters used and the order of removal of unnecessary influencing-parameters from the current equation,

f) calculating the performance of the current equation and recording this performance with reference to the equation-parameters in the current equation in a performance-database,

g) repeating the steps b) to f) until for none of the influencing-parameters that are equation-parameters either the significance is lower than a predetermined value or the correlation is higher than a predetermined value or for one of the unnecessary-parameters the significance has become higher than a predetermined value while at the same time the correlation has become lower than a predetermined value.

h) re-introducing the influencing-parameter that according to the parameter-database was last removed as new unnecessary influencing-parameter,

i) repeating the steps b) to h) until either the influencing-parameter to be excluded is the start value or until no equation-parameter that has a significance that is lower than a predetermined value or a correlation that is higher than a predetermined value can be excluded without leading to a combination of equation-parameters that has already been sampled,

j) selecting from the database the set of equation-parameters which provided the best performance and generating a final equation by use of multiple regression analysis based on these influencing-parameters and their individual values in the value-database.

In this alternative, when it is determined, whether the significance is lower than a predetermined value and significance is measured by the Prob>F value, it is obvious to the man skilled in the art, that the determination if an influencing-parameter is insignificant is determined by testing whether Prob>F is larger than a predetermined value.

For determining the coil life of a coil in a furnace, the variables influencing the coil life are mainly variables that reflect the operating conditions and the design of the furnace.

Operating conditions are for example the coil installation date, the quantities of products fed through the furnace and the coil, temperatures in the furnace and on the outside, the kind of products feed through the furnace, inspection results, for example on coil deformation, coil wall thickness and/or coil diameter, rates and ratios of mechanical cleaning, cool down and start up of the furnace.

Furnace design variables are for example the site location, feed pipe layout, furnace type, furnace placement, coil placement, coil type, coil material and coil manufacturer. Other pieces of information that can have an influence on coil lifetime and that can be quantified nominally or continuously can additionally be introduced. For modelling coil life in a furnace of a chemical process, especially in ethylene production, operating conditions can among others be described by the quantities of dilution steam, fuel gas and feed; the temperatures of the coil skin, the transfer line exchanger, the coil outlet, the crossover and the stack; the kind of the feed, the quality of the feed (with respect to contaminants), the flow of the feed (with respect to amount and fluctuations); the rates and ratios of mechanical cleaning, decoke stops, air/steam ratio during decoke, feed switches, cool down and start up; inspection results on carburisation, coil deformation, coil diameter, coil wall thickness; and design parameters.

Since the model will be used for predicting life of a piece of equipment in a furnace in a continuous process, in which the values of the influencing-parameters might change during operation, the influencing-parameters can be defined as mean values of the parameters and an extra variable per parameter can be introduced as representation of how the parameter has changed during coil life, possibly by use of ratios.

In a preferred embodiment of the method for determining the probable life of a piece of equipment in a furnace, a formula of the type described above under (1) is put together, expressing the expected life in terms of variables relevant for the life and factors of influence, which are the constants. For modelling, influencing-parameters (variables) that are relevant for the life of the piece of equipment are identified, advantageously by use of statistical methods, ie. by determining the significance and the correlation of the variables. Then the data for the variables is collected from already completed processes, ie. processes where the piece of equipment has already failed. Hereafter, a further step can be advantageously added, in order to determine the relevance of the influencing-paramters for which the data has been collected, advantageously by use of statistical methods. This data collection includes data on the actual life achieved in the completed process and the replacement reason. The more data can be collected for each individual process, the more precise the model will become. Also will the accuracy of the model be increased, the larger the number of data sets is, ie. the larger the number of completed processes that are researched is. A multiple regression analysis will be performed on these data sets in order to generate the constants (factors of influence). Finally these factors of influence can be put into the formula (1) and thus provide a model for coil life. For a newly installed coil or a coil already in operation, values for the influencing parameters can be fed into the equation, which will then give a value of an expected coil life. Furthermore, if a certain life is desired, the method for determining the probable life can be used to establish operating conditions under which the furnace has to be operated in order to achieve the desired life.

Preferably the data is taken from a furnace control system and/or the operational history of a furnace and/or the design of the furnace. Especially using a furnace control system as source for data makes modelling of the life of the piece of equipment simple, as the furnace control system generally stores the data in electronic form, which can easily be used in the multiple regression analysis and which can also easily be used to be fed into the model equation, once this has been derived.

Large benefits through minimisation of costs are achieved in plants with furnaces, if the above model is integrated into a method for performing maintenance on the furnace. Due to the increased accuracy of the predicted life of the piece of equipment, purchase of a replacement-piece and cool down of the furnace for replacement can precisely be planned. This makes storing extra pieces obsolete, thus reducing the amount of capital bound by unused equipment. Furthermore, the furnace downtimes and the maintenance frequency can be decreased, as well as the production continuity can be increased.

The method for performing maintenance on a furnace can consist of a system, into which operational data and/or design data of the furnace is fed and which generates a value for an expected life. When the actual life equates to the predicted life, the method for performing maintenance requires a change of the coil. Alternatively, values that are derived from the predicted life can be used. For example, replacement of the coil can take place a week before the actual life equals the predicted life.

The operational data fed into the system can be taken from a furnace control system and used to fill the variables in a formula of the type (1) which is stored in the system and which has previously been found by multiple regression analysis in the way described above.

The method for performing maintenance can be further improved, if it is designed to be self-learning. That is, if the method allows for modification of the formula used to calculate the expected life. Preferably, collected data for variables relevant for the life of a piece of equipment from a furnace which failed pre-predicted is used to modify the factors of influence. If the piece, on which the method for performing maintenance has been applied, fails before the predicted of life, the data that has been collected for the influencing-parameters over the coil life should be used to modify the factors of influence in order to adapt the formula better to the furnace and the actual running conditions. Especially in a big plant, where the method for performing maintenance is used for a multitude of furnaces, this way of adapting the formula to the actual conditions of the plant will constantly improve the method. One way of improving to modify the factors of influence is to run a new multiple regression analysis in the system, using stored data from completed processes that is supplemented by the new data. Instead of waiting for the coil to fail and to modify the factors of influence only after the coil has failed, modification of the factors of influence can also occur pre-failure. The fact that with a coil in operation, operation parameters which the coil has already been subjected to have not caused a failure is important knowledge that can be fed into the multiple regression analysis to improve the accuracy of the model.

According to an aspect of the invention, a maintenance-system is provided that consists of a calculating unit, a storage unit, an input unit, whereby

- a formula of the type used in multiple regression analysis that expresses an expected life of a piece of equipment in a furnace in terms of influencing-parameters relevant for the life and factors of influence is stored in the storage unit,
- the calculating unit is adapted to read the formula from the storage unit,
- the calculating unit is adapted to apply the formula to values for the variables received from the input unit and/or read from the storage unit so as to generate a value for an expected life.

Such a maintenance-system can be used easily and has the further technical advantage that operational parameters that are generated in a furnace control system, that runs electronically and stores data electronically can easily be read into the system via an input unit that runs electronically allowing for an online, continuous calculation of the expected life.

Additionally the calculating unit can be adapted to compare the value for an expected life with a value for the actual life generated from data received from the input unit and/or read from the storage unit to generate a value for remaining life. The value for remaining life gives a figure that is easy to handle when planning the replacement of the piece in use. Also prediction confidence limits, the survival and failure probability and an estimate for the future replacement costs can be generated.

The method for modelling coil life in a furnace, the method for performing maintenance on a coil in a furnace and the maintenance-system according to the invention can advantageously be used in ethylene production processes and plants. Since ethylene is one of the most produced chemicals, sufficient historical data on coil life for this production process is available, which allows for generating a very accurate model.

An embodiment of the present invention will now be described, by way of an example, with reference to the accompanying drawings, in which:

    Fig. 1 is a representation of the way influencing-parameters are introduced into the equation in order to obtain the combination of influencing-parameters giving the best prediction;
Fig. 2 to 14 are print-outs of results showing the significance and correlation of each influencing-parameter in relation to the influencing-parameters in the equation and showing the performance of the current equation.

The example shown by use of the figures is used to exemplify how the method for determining the probable life of a piece of equipment in a furnace according to the invention is applied. By means of the method according to the invention, the probable coil life of a coil in a furnace is determined.

As influencing-parameters relevant for the coil-life, % Butane tn, % Co-crack tn, % GasCond. tn, % LPG tn and % Naphtha tn are selected. They represent what percentage of the total feed applied to a coil was of the different types: butane (% Butane), a mixture of regular feed (e.g. Naphtha, LPG) and returned/recycled off-grad product, suitable to be cracked again (% Co-Crack), condensated gas taht is obtained with the extraction of petroleum (% GasCond), liquefied petroleum gas (% LPG) and Naphtha (% Naptha). For these variables, data is collected in a value-database. Here individual values for the coil life (ie. the value when the coil failed (cracked)/is exchanged) are related to the respective individual values of the influencing-parameters that led to the individual coil life.

In order to determine the probable coil life, a multiple regression analysis is performed on the collected data. However, the multiple regression analysis is not performed on all influencing-parameters, but tried on several combinations of influencing-parameters in order to obtain the best model.

For the following, the influencing-parameters are referred to by numbers, influencing-parameter 1 being % Butane tn, influencing-parameter 2 being % Co-crack tn, influencing-parameter 3 being % GasCond. tn, influencing-parameter 4 being % LPG tn and influencing-parameter 5 being % Naphtha tn.

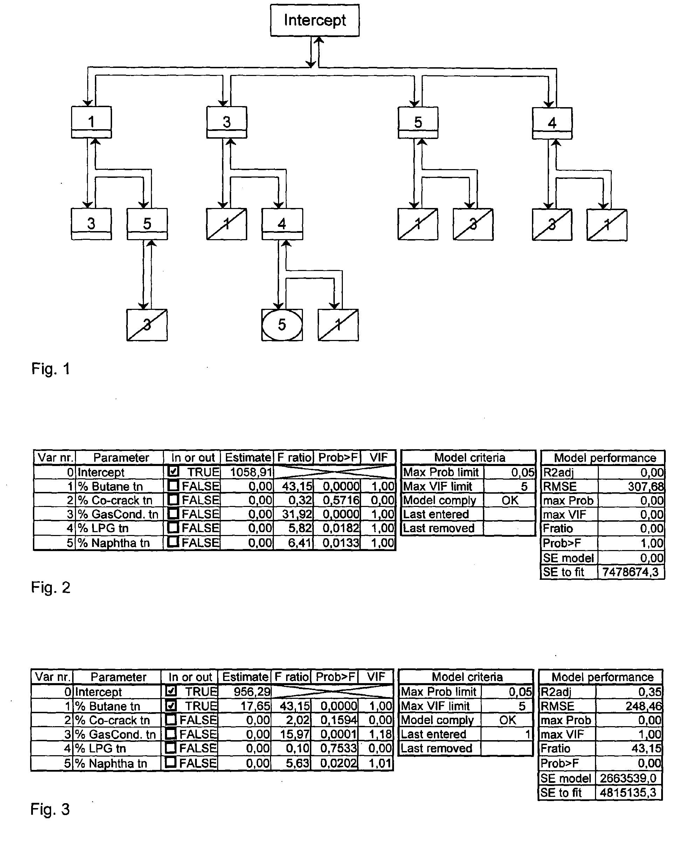

As shown in Fig. 1, starting from the intercept, ie. the mean value of all coil lifes in the database, as start value that is entered as first influencing-parameter into the equation, different influencing-parameters are entered into the equation in order to sample the performance of that equation. Introducing a parameter into the equation is to be understood as adding this new influencing-parameter to the combination of equation-parameters and generating a new current equation on the basis of these equation-parameters, ie. the combination of influencing-parameters that now includes the newly introduced influencing-parameters. Each equation is generated by means of standard multiple regression analysis, generating a formula, wherein the equation-parameters are variables to the equation and the factors of influence the constants of each equation-parameter. Furthermore, a current equation is generated after removal of an influencing-parameter according to the method.

The introduction of the influencing-parameters or there exclusion respectively is done according to the following steps:

1) determining a significance value and a correlation value for each influencing-parameter with respect to the equation-parameter(s),

2) selecting as new equation-parameter the influencing-parameter with the highest significance and the lowest correlation that is not an equation-parameter and has according to a parameter-database not been used as equation-parameter in combination with the equation-parameters of the current equation,

3) replacing the current equation with a new current equation by generating the new current equation based on the equation-parameters now including the new equation-parameter by means of multiple regression analysis based on the values of the value-database,

4) recording in parameter-database the combination of influencing-parameters already used as equation-parameters and the order of introducing the equation-parameters into the current equation,

5) calculating the performance of the current equation and recording this performance with reference to the equation-parameters in the current equation in a performance-database

6) repeating the steps 1) to 5) until for none of the influencing-parameters that are not equation-parameters the significance is higher than a predetermined value while at the same time the correlation is lower than a predetermined value or either the significance of an equation-parameter has become lower than a predetermined value or the correlation of an equation-parameter becomes higher than a predetermined value,

7) excluding the influencing-parameter that according to the parameter-database was last selected as new equation-parameter and replacing the current equation with a new current equation by generating the new current equation based on the equation-parameters that remain after exclusion of the last selected influencing-parameter by means of multiple regression analysis based on the values of the value-database,

8) repeating the steps 1) to 7) until the influencing-parameter to be excluded is the start value.

This leads to a series of tried combinations as shown in Fig. 1. Starting from the intercept a significance value (Prob>F) and a correlation value (VIF) for each influencing-parameter with respect to the only equation-parameter (the intercept) is calculated. The result is shown in Fig. 2. This shows that influencing-parameter 1 has the highest significance (Prob>F has the lowest value) and the lowest correlation (VIF has the lowest value) that satisfy the selected predetermined levels of Prob>F less than 0,05 and VIF<5. Since influencing-parameter 1 has not been tried as equation-parameter in combination with the intercept, influencing parameter 1 is selected as new equation-parameter and introduced into the equation and the new current equation is generated.

Calculating the significance value and the correlation value of the influencing-parameters in relation to the new combination of equation-parameters (intercept, 1) leads to the results shown in Fig. 3. Here influencing-parameter 3 is selected as new influencing-parameter to be introduced as equation-parameter, as the correlation is the lowest, the significance is the highest and influencing-parameter 3 has not been tried as equation-parameter in combination with the influencing-parameters already in the equation (intercept, 1). The new current equation is generated.

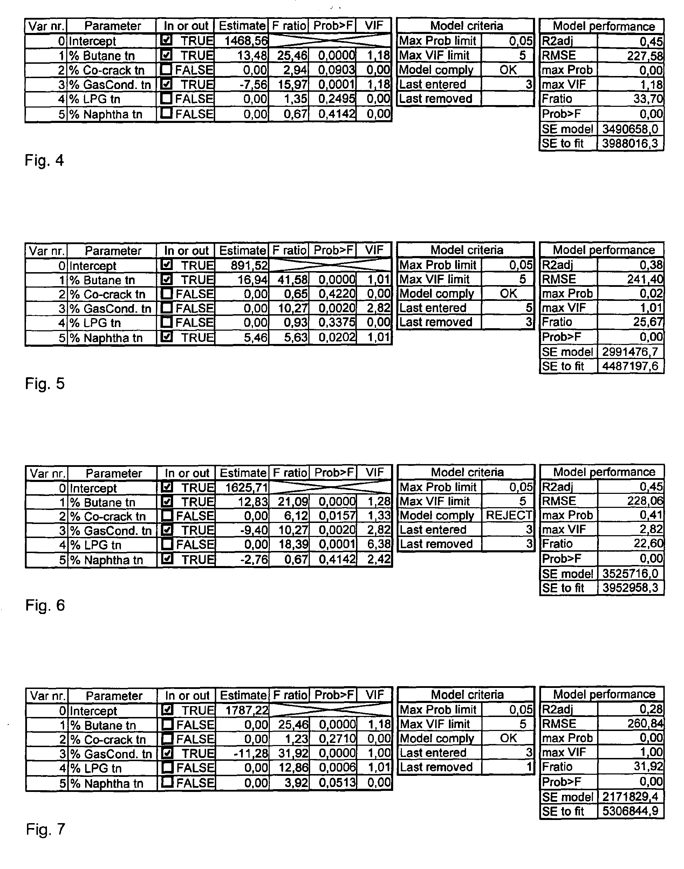

When calculating Prob>F and VIF for the influencing-parameters in relation to the new combination of equation-parameters, no further influencing-parameter can be selected as new equation-parameter, as no influencing-parameter not yet equation-parameter has a Prob>F value lower than 0,05 and a VIF value of lower than 5 (cf. Fig. 4). While normally this would be expected to be the best model, as the values with the lowest correlation and the highest significance have been introduced into the equation, the method according to the invention teaches to continue combining influencing-parameters into equations by first removing the last introduced influencing-parameter (3). This leads to an equation with results as shown in Fig. 3

Though influencing-parameter 3 has - as was said above - the lowest correlation value and lowest significance value (ie. highest significance) at this level, according to the method it can not be selected at this stage, as it has already been tried in combination with the current equation-parameters (intercept, 1). Thus according to the method influencing-parameter 5 is selected as new equation-parameter, as it has a significance that is higher than a predetermined value (Prob>F is less than 0,05) and has a correlation that is lower than a predetermined value (VIF<5) and also has not been tried in combination with the current equation-parameters (intercept, 1). With this set of equation-parameters (intercept, 1, 5) a new current equation is generated.

As shown in Fig. 5, only the significance value and the correlation value of influencing-parameter 3 allow its selection as new equation-parameter, as only these are lower than the predetermined values. Thus a new current equation is generated on the basis of this combination of equation-parameters.

Fig. 6 shows that by introducing influencing-parameter 3 into the equation, the significance value of influencing-parameter 5 became higher than the predetermined value (Prob>F equals 0,4142 which is > 0,05). Thus influencing-parameter 5 became insignificant. According to the method, no new equation-parameter can be selected at this stage, but the last introduced influencing-parameter has to be removed, ie. influencing-parameter 3. Note that according to the method, not the influencing-parameter that became insignificant (5), but the last introduced influencing-parameter (3) is excluded. The situation thus returns to the combination shown in Fig. 5. Here it can be seen that no other influencing-parameter satisfies the conditions for significance and correlation apart from influencing-parameter 3, which can not be selected as it has already been tried in combination with the current equation parameters (intercept, 1, 5). Thus, according to the method, the last influencing-parameter introduced into the equation that led to this situation is removed from the equation, ie. influencing parameter 5. This leads to a situation as shown in Fig. 3. Once again, no influencing-parameter can be selected, that satisfies the conditions for significance and correlation that at the same time has not been tried as equation-parameter in combination with the current equation-parameters (intercept, 1). Thus the last influencing-parameter entered into the equation that led to this situation has to be removed, ie. influencing-parameter 1. This leads to the situation shown in Fig. 2.

Fig. 2 shows, that apart from influencing-parameter 1, which has already been tried in combination with the current equation-parameter (intercept), Influencing-parameters 3, 5 and 4 satisfy the conditions for correlation and significance. Of these, influencing-parameter 3 has the lowest correlation and highest significance (lowest Prob>F value) and is thus selected as new equation-parameter. The result is shown in Fig. 7.

Though here influencing-parameter 1 shows the lowest correlation and highest significance, since the combination of influencing-parameters intercept, 1 and 3 has already been tried as shown in Fig. 4, influencing-parameter 1 can not be selected as new influencing-parameter at this stage. Thus influencing-parameter 4 is selected, as it satisfies the conditions for significance and correlation and at the same time has not been tried as equation-parameter in combination with the current equation-parameters (intercept, 3). A new current equation is generated.

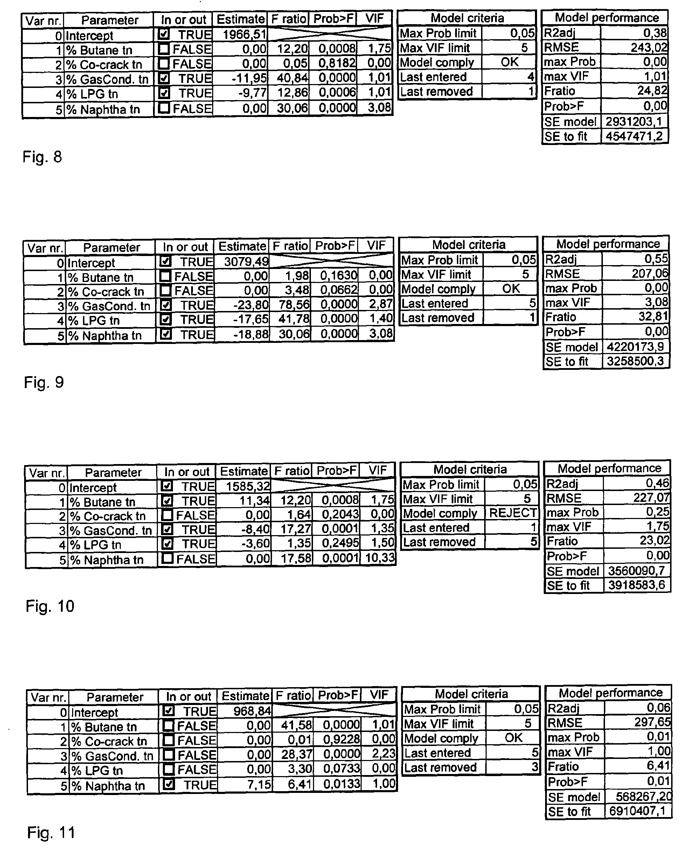

Fig. 8 shows the correlation and significance of the influencing-parameters in relation to the equation-parameters (intercept, 3,4). It can be seen that here influencing-parameter 5 can be selected as new equation-parameter as it satisfies the above mentioned conditions and has not been tried in combination with the equation-parameters (intercept, 3, 4). A further current equation is generated.

As can be deducted from Fig. 9, no new equation-parameter can be selected, as none of the influencing-parameters that are not equation-parameters satisfies the conditions. Thus according to the method, the last introduced influencing-parameter is removed from the equation, ie. influencing-parameter 5. This leads to a situation as shown in Fig. 8.

Since influencing-parameter 5 can now not be selected, as it has already been tried in combination with the current equation-parameters (intercept, 3,4), only influencing-parameter 1 can be selected, as it satisfies the above mentioned conditions, ie. has a correlation value that is lower than the predetermined value (VIF<5) and a significance value that is lower than a predetermined value (Prob>F is less than 0,05). With the selected influencing-parameter 1 a new current equation is generated.

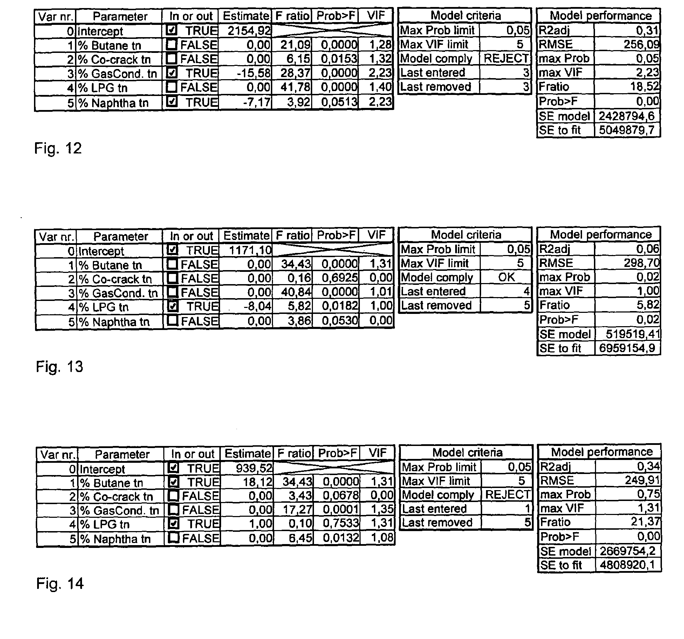

As shown in Fig. 10, the introduction of influencing-parameter 1 causes influencing-parameter 4 (an equation-parameter) to become insignificant. According to the method, no further influencing-parameter is selected as equation-parameter, but the last introduced influencing-parameter (1) is removed. This leads to the same situation as shown in Fig. 8. Here it can be seen that no other influencing-parameter satisfies the conditions for significance and correlation apart from influencing-parameter 5, which can not be selected as it has already been tried in combination with the current equation parameters (intercept, 3, 4). Thus, according to the method, the last influencing-parameter introduced into the equation that led to this situation is removed from the equation, ie. influencing parameter 4. This leads to a situation as shown in Fig. 7. Once again, no influencing-parameter can be selected, that satisfies the conditions for significance and correlation that at the same time has not been tried as equation-parameter in combination with the current-equation parameters (intercept, 3). Thus the last influencing-parameter entered into the equation that led to this situation has to be removed, ie. influencing-parameter 3. This leads to the situation shown in Fig. 2.

Fig. 2 shows, that apart from influencing-parameters 1,3, which have already been tried in combination with the current equation-parameter (intercept), influencing-parameters 5 and 4 satisfy the conditions for correlation and significance. Of these, influencing-parameter 5 has the lowest correlation and highest significance (lowest Prob>F value) and is thus selected as new equation-parameter. The result is shown in Fig. 11.

As influencing-parameter 1 has already been tried in combination with the current equation parameters (intercept, 5) as seen in Fig. 5, only influencing-parameter 3 remains that can be selected as new equation-parameter according to the above conditions. The new current equation generated on the basis of this combination of influencing parameters (intercept, 5,3) leads to a situation as shown in Fig. 12.

There it can be seen that by introducing influencing-parameter 3 into the equation, influencing-parameter 5 (an equation-parameter) has been made insignificant. Thus according to the method the last introduced influencing-parameter is removed (influencing-parameter 3), which leads to a situation shown in Fig. 11 from which no further influencing-parameter can be removed. Accordingly, the last introduced influencing-parameter, that led to this situation, is removed (influencing-parameter 5), which leads to a situation shown in Fig. 2.

Fig. 2 shows, that apart from influencing-parameters 1,3,5, which have already been tried in combination with the current equation-parameter (intercept), influencing-parameter 4 satisfies the conditions for correlation and significance. Thus this is selected as new equation-parameter. The result is shown in Fig. 13.

As influencing-parameter 3 has already been tried in combination with the current equation parameters (intercept, 4) as seen in Fig. 8, only influencing-parameter 1 remains that can be selected as new equation-parameter according to the above conditions. The new current equation generated on the basis of this combination of influencing parameters (intercept, 4,1) leads to a situation as shown in Fig. 14.

There it can be seen that by introducing influencing-parameter 3 into the equation, influencing-parameter 4 (an equation-parameter) has been made insignificant. Thus according to the method the last introduced influencing-parameter is removed (influencing-parameter 1), which leads to a situation shown in Fig. 13 from which no further influencing-parameter can be removed. Accordingly, the last introduced influencing-parameter, that led to this situation, is removed (influencing-parameter 5), which leads to a situation shown in Fig. 2. From here, no other influencing-parameter can be selected as new equation-parameter, which according to the method would lead to the last entered influencing-parameter to be removed. Since this is however the start-value (intercept) the process of introducing/removing influencing-parameters is halted at this stage.

Now the equation that provided the best performance needs to be selected. During each calculation step for a new current equation, the performance of the current equation was calculated and is represented in the respective Figs. These performance-values in relation to the combination of influencing-parameters in the equation that led to this performance are stored at each step in a performance-database. From this database the combination of influencing-parameters leading to the best performing equation (influencing-parameters 3,4,5 as can be seen from Fig. 9) is selected and the final equation is generated.

Current values taken from the operating furnace are fed into this equation, which then leads to a value for the probable coil life.

In order to aid determining which influencing-parameter can be added or which influencing-parameter has to removed as last introduced influencing-parameter, at each step a parameter-database keeps record of what combinations have already been tried and in what order the influencing-parameters were introduced into the equation.

From this example it can be seen that the method according to the invention leads to a result, that would previously not be expected. Instead of only introducing strong influencing-parameters into the equation, ie. those that have a very low correlation and a very high significance, according to the method also less strong variables are tried. Traditionally, the model as shown in Fig. 4 would be considered as best model. However comparing the performances shows, that the combination of Fig. 9 leads to the best performing model.

The method according to the invention not only leads to a better model, but also reduces calculation time and hardware necessary to obtain this better model. According to the method, not all possible combinations of influencing-parameters as equation-parameters have to be tried, which would lead to immense calculation times and would make fast calculating machines necessary, but only a special selection of combinations is tried.

**Claims**

1. Method for determining the probable life of a piece of equipment in an industrial plant which uses multiple regression analysis to express an expected life in terms of variables relevant for the life.

2. Method according to claim 1, consisting at least of the following steps:

   - identifying the variables relevant for the life of the piece of equipment,
   - collecting data for the variables relevant for the life of the piece of equipment and the according life,
   - performing a multiple regression analysis using the collected data to determine for the variables factors of influence on the life,
   - generating a formula of the type used in multiple regression analysis, expressing the expected life in terms of the variables using the factors of influence found.

3. Method according to claim 2, wherein the data is taken from a control system and/or the operational history of an industrial plant and/or the design of the industrial plant.

4. Method according to one of the claims 1 to 3, whereby a formula to model the expected life from a value-database correlating individual values for the life with other individual values of one or more influencing-parameters, contains the following steps:

   a) determining a start value as first influencing-parameter,

   b) generating a current equation based on the start value and thereby entering the start value as equation-parameter into the equation,

c) determining a significance value and a correlation value for each influencing-parameter with respect to the equation-parameter(s),

d) selecting as new equation-parameter the influencing-parameter with the highest significance and the lowest correlation that is not an equation-parameter and has according to a parameter-database not been used as equation-parameter in combination with the equation-parameters of the current equation,

e) replacing the current equation with a new current equation by generating the new current equation based on the equation-parameters now including the new equation-parameter by means of multiple regression analysis based on the values of the value-database,

f) recording in parameter-database the combination of influencing-parameters already used as equation-parameters and the order of introducing the equation-parameters into the current equation,

g) calculating the performance of the current equation and recording this performance with reference to the equation-parameters in the current equation in a performance-database

h) repeating the steps c) to g) until for none of the influencing-parameters that are not equation-parameters the significance is higher than a predetermined value while at the same time the correlation is lower than a predetermined value or either the significance of an equation-parameter has become lower than a predetermined value or the correlation of an equation-parameter becomes higher than a predetermined value,

i) excluding the influencing-parameter that according to the parameter-database was last selected as new equation-parameter and replacing the current equation with a new current equation by generating the new current equation based on the equation-parameters that remain after exclusion of the last selected influencing-parameter by means of multiple regression analysis based on the values of the value-database,

j) repeating the steps c) to i) until the influencing-parameter to be excluded is the start value,

k) selecting from the database the set of equation-parameters which provided the best performance and generating a final equation by use of multiple regression analysis based on these influencing-parameters and their individual values in the value-database.

5. Method according to one of the claims 1 to 3, whereby a formula to model the expected life from a value-database correlating individual values for the life with other individual values of one or more influencing-parameters, contains the following steps:

a) generating a current equation based on the all influencing-parameters and as further influencing-parameter a determined start-value as equation-parameters by means of multiple regression analysis based on the values of the value-database,

b) determining a significance value and a correlation value for each influencing-parameter with respect to the equation-parameters,

c) selecting as new unnecessary influencing-parameter the equation-parameter with the lowest significance and the highest correlation that is according to a parameter-database not an unnecessary influencing-parameter and whose removal as equation-parameter does according to a parameter-database not lead to a combination of equation-parameters that according to the parameter-database has previously been used,

d) replacing the current equation with a new current equation by generating the new current equation based on the set of equation-parameters from which the new unnecessary influencing-parameter has been removed by means of multiple regression analysis based on the values of the value-database,

e) recording in the parameter-database the combinations of parameters used and the order of removal of unnecessary influencing-parameters from the current equation,

f) calculating the performance of the current equation and recording this performance with reference to the equation-parameters in the current equation in a performance-database,

g) repeating the steps b) to f) until for none of the influencing-parameters that are equation-parameters either the significance is lower than a predetermined value or the correlation is higher than a predetermined value or for one of the unnecessary-parameters the significance has become higher than a predetermined value while at the same time the correlation has become lower than a predetermined value.

h) re-introducing the influencing-parameter that according to the parameter-database was last removed as new unnecessary influencing-parameter,

i) repeating the steps b) to h) until either the influencing-parameter to be excluded is the start value or until no equation-parameter that has a significance that is lower than a predetermined value or a correlation that is higher than a predetermined value can be excluded without leading to a combination of equation-parameters that has already been sampled,

j) selecting from the database the set of equation-parameters which provided the best performance and generating a final equation by use of multiple regression analysis based on these influencing-parameters and their individual values in the value-database.

6. Method for performing maintenance on an industrial plant, whereby operational data and/or design data of the industrial plant is fed into a system, which generates at least one value for an expected life of one piece of equipment of the industrial plant and whereby the piece of equipment is exchanged when the actual life equates to the predicted life or a value derived from the predicted life, whereby

- the system uses a formula of the type used in multiple regression analysis, expressing the expected life in terms of variables relevant for the life using factors of influence and
- the factors of influence are found by performing a multiple regression analysis using data collected for variables relevant for the life and the according life.

7. Method according to claim 6, **characterised in that** collected data for variables relevant for the life from a piece of equipment of the same type which failed pre-predicted is used to modify the factors of influence.

8. Method according to claim 6 or 7, **characterised in that** a method according to one of the claims 1 to 5 is used.

9. Maintenance-System consisting of a calculating unit, a storage unit, an input unit **characterised in that**

- a formula of the type used in multiple regression analysis that expresses an expected life of a piece of equipment in terms of influencing-parameters relevant for the life and factors of influence is stored in the storage unit,

- the calculating unit is adapted to read the formula from the storage unit,
- the calculating unit is adapted to apply the formula to values for the variables received from the input unit and/or read from the storage unit so as to generate a value for an expected life.

10. Maintenance-System according to claim 9, **characterised in that** the calculating unit is adapted to compare the value for an expected life with a value for the actual life generated from data received from the input unit and/or read from the storage unit to generate a value for remaining life.

11. Use of the method according to one of the claims 1 to 5, of the method according to claim 6 to 8 and/or of the maintenance-system according to claim 9 or 10 for operating an ethylene production plant.

Fig. 1

| Var nr. | Parameter | In or out | Estimate | F ratio | Prob>F | VIF |
|---|---|---|---|---|---|---|
| 0 | Intercept | ☑ TRUE | 1058,91 | | | |
| 1 | % Butane tn | ☐ FALSE | 0,00 | 43,15 | 0,0000 | 1,00 |
| 2 | % Co-crack tn | ☐ FALSE | 0,00 | 0,32 | 0,5716 | 0,00 |
| 3 | % GasCond. tn | ☐ FALSE | 0,00 | 31,92 | 0,0000 | 1,00 |
| 4 | % LPG tn | ☐ FALSE | 0,00 | 5,82 | 0,0182 | 1,00 |
| 5 | % Naphtha tn | ☐ FALSE | 0,00 | 6,41 | 0,0133 | 1,00 |

| Model criteria | |
|---|---|
| Max Prob limit | 0,05 |
| Max VIF limit | 5 |
| Model comply | OK |
| Last entered | |
| Last removed | |

| Model performance | |
|---|---|
| R2adj | 0,00 |
| RMSE | 307,68 |
| max Prob | 0,00 |
| max VIF | 0,00 |
| Fratio | 0,00 |
| Prob>F | 1,00 |
| SE model | 0,00 |
| SE to fit | 7478674,3 |

Fig. 2

| Var nr. | Parameter | In or out | Estimate | F ratio | Prob>F | VIF |
|---|---|---|---|---|---|---|
| 0 | Intercept | ☑ TRUE | 956,29 | | | |
| 1 | % Butane tn | ☑ TRUE | 17,65 | 43,15 | 0,0000 | 1,00 |
| 2 | % Co-crack tn | ☐ FALSE | 0,00 | 2,02 | 0,1594 | 0,00 |
| 3 | % GasCond. tn | ☐ FALSE | 0,00 | 15,97 | 0,0001 | 1,18 |
| 4 | % LPG tn | ☐ FALSE | 0,00 | 0,10 | 0,7533 | 0,00 |
| 5 | % Naphtha tn | ☐ FALSE | 0,00 | 5,63 | 0,0202 | 1,01 |

| Model criteria | |
|---|---|
| Max Prob limit | 0,05 |
| Max VIF limit | 5 |
| Model comply | OK |
| Last entered | 1 |
| Last removed | |

| Model performance | |
|---|---|
| R2adj | 0,35 |
| RMSE | 248,46 |
| max Prob | 0,00 |
| max VIF | 1,00 |
| Fratio | 43,15 |
| Prob>F | 0,00 |
| SE model | 2663539,0 |
| SE to fit | 4815135,3 |

Fig. 3

| Var nr. | Parameter | In or out | | Estimate | F ratio | Prob>F | VIF |
|---|---|---|---|---|---|---|---|
| 0 | Intercept | ☑ | TRUE | 1468,56 | | | |
| 1 | % Butane tn | ☑ | TRUE | 13,48 | 25,46 | 0,0000 | 1,18 |
| 2 | % Co-crack tn | ☐ | FALSE | 0,00 | 2,94 | 0,0903 | 0,00 |
| 3 | % GasCond. tn | ☑ | TRUE | -7,56 | 15,97 | 0,0001 | 1,18 |
| 4 | % LPG tn | ☐ | FALSE | 0,00 | 1,35 | 0,2495 | 0,00 |
| 5 | % Naphtha tn | ☐ | FALSE | 0,00 | 0,67 | 0,4142 | 0,00 |

| Model criteria | |
|---|---|
| Max Prob limit | 0,05 |
| Max VIF limit | 5 |
| Model comply | OK |
| Last entered | 3 |
| Last removed | |

| Model performance | |
|---|---|
| R2adj | 0,45 |
| RMSE | 227,58 |
| max Prob | 0,00 |
| max VIF | 1,18 |
| Fratio | 33,70 |
| Prob>F | 0,00 |
| SE model | 3490658,0 |
| SE to fit | 3988016,3 |

Fig. 4

| Var nr. | Parameter | In or out | | Estimate | F ratio | Prob>F | VIF |
|---|---|---|---|---|---|---|---|
| 0 | Intercept | ☑ | TRUE | 891,52 | | | |
| 1 | % Butane tn | ☑ | TRUE | 16,94 | 41,58 | 0,0000 | 1,01 |
| 2 | % Co-crack tn | ☐ | FALSE | 0,00 | 0,65 | 0,4220 | 0,00 |
| 3 | % GasCond. tn | ☐ | FALSE | 0,00 | 10,27 | 0,0020 | 2,82 |
| 4 | % LPG tn | ☐ | FALSE | 0,00 | 0,93 | 0,3375 | 0,00 |
| 5 | % Naphtha tn | ☑ | TRUE | 5,46 | 5,63 | 0,0202 | 1,01 |

| Model criteria | |
|---|---|
| Max Prob limit | 0,05 |
| Max VIF limit | 5 |
| Model comply | OK |
| Last entered | 5 |
| Last removed | 3 |

| Model performance | |
|---|---|
| R2adj | 0,38 |
| RMSE | 241,40 |
| max Prob | 0,02 |
| max VIF | 1,01 |
| Fratio | 25,67 |
| Prob>F | 0,00 |
| SE model | 2991476,7 |
| SE to fit | 4487197,6 |

Fig. 5

| Var nr. | Parameter | In or out | | Estimate | F ratio | Prob>F | VIF |
|---|---|---|---|---|---|---|---|
| 0 | Intercept | ☑ | TRUE | 1625,71 | | | |
| 1 | % Butane tn | ☑ | TRUE | 12,83 | 21,09 | 0,0000 | 1,28 |
| 2 | % Co-crack tn | ☐ | FALSE | 0,00 | 6,12 | 0,0157 | 1,33 |
| 3 | % GasCond. tn | ☑ | TRUE | -9,40 | 10,27 | 0,0020 | 2,82 |
| 4 | % LPG tn | ☐ | FALSE | 0,00 | 18,39 | 0,0001 | 6,38 |
| 5 | % Naphtha tn | ☑ | TRUE | -2,76 | 0,67 | 0,4142 | 2,42 |

| Model criteria | |
|---|---|
| Max Prob limit | 0,05 |
| Max VIF limit | 5 |
| Model comply | REJECT |
| Last entered | 3 |
| Last removed | 3 |

| Model performance | |
|---|---|
| R2adj | 0,45 |
| RMSE | 228,06 |
| max Prob | 0,41 |
| max VIF | 2,82 |
| Fratio | 22,60 |
| Prob>F | 0,00 |
| SE model | 3525716,0 |
| SE to fit | 3952958,3 |

Fig. 6

| Var nr. | Parameter | In or out | | Estimate | F ratio | Prob>F | VIF |
|---|---|---|---|---|---|---|---|
| 0 | Intercept | ☑ | TRUE | 1787,22 | | | |
| 1 | % Butane tn | ☐ | FALSE | 0,00 | 25,46 | 0,0000 | 1,18 |
| 2 | % Co-crack tn | ☐ | FALSE | 0,00 | 1,23 | 0,2710 | 0,00 |
| 3 | % GasCond. tn | ☑ | TRUE | -11,28 | 31,92 | 0,0000 | 1,00 |
| 4 | % LPG tn | ☐ | FALSE | 0,00 | 12,86 | 0,0006 | 1,01 |
| 5 | % Naphtha tn | ☐ | FALSE | 0,00 | 3,92 | 0,0513 | 0,00 |

| Model criteria | |
|---|---|
| Max Prob limit | 0,05 |
| Max VIF limit | 5 |
| Model comply | OK |
| Last entered | 3 |
| Last removed | 1 |

| Model performance | |
|---|---|
| R2adj | 0,28 |
| RMSE | 260,84 |
| max Prob | 0,00 |
| max VIF | 1,00 |
| Fratio | 31,92 |
| Prob>F | 0,00 |
| SE model | 2171829,4 |
| SE to fit | 5306844,9 |

Fig. 7

| Var nr. | Parameter | In or out | | Estimate | F ratio | Prob>F | VIF | | Model criteria | | | Model performance | |
|---|---|---|---|---|---|---|---|---|---|---|---|---|---|
| 0 | Intercept | ☑ | TRUE | 1966,51 | | | | | Max Prob limit | 0,05 | | R2adj | 0,38 |
| 1 | % Butane tn | ☐ | FALSE | 0,00 | 12,20 | 0,0008 | 1,75 | | Max VIF limit | 5 | | RMSE | 243,02 |
| 2 | % Co-crack tn | ☐ | FALSE | 0,00 | 0,05 | 0,8182 | 0,00 | | Model comply | OK | | max Prob | 0,00 |
| 3 | % GasCond. tn | ☑ | TRUE | -11,95 | 40,84 | 0,0000 | 1,01 | | Last entered | 4 | | max VIF | 1,01 |
| 4 | % LPG tn | ☑ | TRUE | -9,77 | 12,86 | 0,0006 | 1,01 | | Last removed | 1 | | Fratio | 24,82 |
| 5 | % Naphtha tn | ☐ | FALSE | 0,00 | 30,06 | 0,0000 | 3,08 | | | | | Prob>F | 0,00 |
| | | | | | | | | | | | | SE model | 2931203,1 |
| | | | | | | | | | | | | SE to fit | 4547471,2 |

Fig. 8

| Var nr. | Parameter | In or out | | Estimate | F ratio | Prob>F | VIF | | Model criteria | | | Model performance | |
|---|---|---|---|---|---|---|---|---|---|---|---|---|---|
| 0 | Intercept | ☑ | TRUE | 3079,49 | | | | | Max Prob limit | 0,05 | | R2adj | 0,55 |
| 1 | % Butane tn | ☐ | FALSE | 0,00 | 1,98 | 0,1630 | 0,00 | | Max VIF limit | 5 | | RMSE | 207,06 |
| 2 | % Co-crack tn | ☐ | FALSE | 0,00 | 3,48 | 0,0662 | 0,00 | | Model comply | OK | | max Prob | 0,00 |
| 3 | % GasCond. tn | ☑ | TRUE | -23,80 | 78,56 | 0,0000 | 2,87 | | Last entered | 5 | | max VIF | 3,08 |
| 4 | % LPG tn | ☑ | TRUE | -17,65 | 41,78 | 0,0000 | 1,40 | | Last removed | 1 | | Fratio | 32,81 |
| 5 | % Naphtha tn | ☑ | TRUE | -18,88 | 30,06 | 0,0000 | 3,08 | | | | | Prob>F | 0,00 |
| | | | | | | | | | | | | SE model | 4220173,9 |
| | | | | | | | | | | | | SE to fit | 3258500,3 |

Fig. 9

| Var nr. | Parameter | In or out | | Estimate | F ratio | Prob>F | VIF | | Model criteria | | | Model performance | |
|---|---|---|---|---|---|---|---|---|---|---|---|---|---|
| 0 | Intercept | ☑ | TRUE | 1585,32 | | | | | Max Prob limit | 0,05 | | R2adj | 0,46 |
| 1 | % Butane tn | ☑ | TRUE | 11,34 | 12,20 | 0,0008 | 1,75 | | Max VIF limit | 5 | | RMSE | 227,07 |
| 2 | % Co-crack tn | ☐ | FALSE | 0,00 | 1,64 | 0,2043 | 0,00 | | Model comply | REJECT | | max Prob | 0,25 |
| 3 | % GasCond. tn | ☑ | TRUE | -8,40 | 17,27 | 0,0001 | 1,35 | | Last entered | 1 | | max VIF | 1,75 |
| 4 | % LPG tn | ☑ | TRUE | -3,60 | 1,35 | 0,2495 | 1,50 | | Last removed | 5 | | Fratio | 23,02 |
| 5 | % Naphtha tn | ☐ | FALSE | 0,00 | 17,58 | 0,0001 | 10,33 | | | | | Prob>F | 0,00 |
| | | | | | | | | | | | | SE model | 3560090,7 |
| | | | | | | | | | | | | SE to fit | 3918583,6 |

Fig. 10

| Var nr. | Parameter | In or out | | Estimate | F ratio | Prob>F | VIF | | Model criteria | | | Model performance | |
|---|---|---|---|---|---|---|---|---|---|---|---|---|---|
| 0 | Intercept | ☑ | TRUE | 968,84 | | | | | Max Prob limit | 0,05 | | R2adj | 0,06 |
| 1 | % Butane tn | ☐ | FALSE | 0,00 | 41,58 | 0,0000 | 1,01 | | Max VIF limit | 5 | | RMSE | 297,65 |
| 2 | % Co-crack tn | ☐ | FALSE | 0,00 | 0,01 | 0,9228 | 0,00 | | Model comply | OK | | max Prob | 0,01 |
| 3 | % GasCond. tn | ☐ | FALSE | 0,00 | 28,37 | 0,0000 | 2,23 | | Last entered | 5 | | max VIF | 1,00 |
| 4 | % LPG tn | ☐ | FALSE | 0,00 | 3,30 | 0,0733 | 0,00 | | Last removed | 3 | | Fratio | 6,41 |
| 5 | % Naphtha tn | ☑ | TRUE | 7,15 | 6,41 | 0,0133 | 1,00 | | | | | Prob>F | 0,01 |
| | | | | | | | | | | | | SE model | 568267,20 |
| | | | | | | | | | | | | SE to fit | 6910407,1 |

Fig. 11

| Var nr. | Parameter | In or out | Estimate | F ratio | Prob>F | VIF | Model criteria | | Model performance | |
|---|---|---|---|---|---|---|---|---|---|---|
| 0 | Intercept | ☑ TRUE | 2154,92 | | | | Max Prob limit | 0,05 | R2adj | 0,31 |
| 1 | % Butane tn | ☐ FALSE | 0,00 | 21,09 | 0,0000 | 1,28 | Max VIF limit | 5 | RMSE | 256,09 |
| 2 | % Co-crack tn | ☐ FALSE | 0,00 | 6,15 | 0,0153 | 1,32 | Model comply | REJECT | max Prob | 0,05 |
| 3 | % GasCond. tn | ☑ TRUE | -15,58 | 28,37 | 0,0000 | 2,23 | Last entered | 3 | max VIF | 2,23 |
| 4 | % LPG tn | ☐ FALSE | 0,00 | 41,78 | 0,0000 | 1,40 | Last removed | 3 | Fratio | 18,52 |
| 5 | % Naphtha tn | ☑ TRUE | -7,17 | 3,92 | 0,0513 | 2,23 | | | Prob>F | 0,00 |
| | | | | | | | | | SE model | 2428794,6 |
| | | | | | | | | | SE to fit | 5049879,7 |

Fig. 12

| Var nr. | Parameter | In or out | Estimate | F ratio | Prob>F | VIF | Model criteria | | Model performance | |
|---|---|---|---|---|---|---|---|---|---|---|
| 0 | Intercept | ☑ TRUE | 1171,10 | | | | Max Prob limit | 0,05 | R2adj | 0,06 |
| 1 | % Butane tn | ☐ FALSE | 0,00 | 34,43 | 0,0000 | 1,31 | Max VIF limit | 5 | RMSE | 298,70 |
| 2 | % Co-crack tn | ☐ FALSE | 0,00 | 0,16 | 0,6925 | 0,00 | Model comply | OK | max Prob | 0,02 |
| 3 | % GasCond. tn | ☐ FALSE | 0,00 | 40,84 | 0,0000 | 1,01 | Last entered | 4 | max VIF | 1,00 |
| 4 | % LPG tn | ☑ TRUE | -8,04 | 5,82 | 0,0182 | 1,00 | Last removed | 5 | Fratio | 5,82 |
| 5 | % Naphtha tn | ☐ FALSE | 0,00 | 3,86 | 0,0530 | 0,00 | | | Prob>F | 0,02 |
| | | | | | | | | | SE model | 519519,41 |
| | | | | | | | | | SE to fit | 6959154,9 |

Fig. 13

| Var nr. | Parameter | In or out | Estimate | F ratio | Prob>F | VIF | Model criteria | | Model performance | |
|---|---|---|---|---|---|---|---|---|---|---|
| 0 | Intercept | ☑ TRUE | 939,52 | | | | Max Prob limit | 0,05 | R2adj | 0,34 |
| 1 | % Butane tn | ☑ TRUE | 18,12 | 34,43 | 0,0000 | 1,31 | Max VIF limit | 5 | RMSE | 249,91 |
| 2 | % Co-crack tn | ☐ FALSE | 0,00 | 3,43 | 0,0678 | 0,00 | Model comply | REJECT | max Prob | 0,75 |
| 3 | % GasCond. tn | ☐ FALSE | 0,00 | 17,27 | 0,0001 | 1,35 | Last entered | 1 | max VIF | 1,31 |
| 4 | % LPG tn | ☑ TRUE | 1,00 | 0,10 | 0,7533 | 1,31 | Last removed | 5 | Fratio | 21,37 |
| 5 | % Naphtha tn | ☐ FALSE | 0,00 | 6,45 | 0,0132 | 1,08 | | | Prob>F | 0,00 |
| | | | | | | | | | SE model | 2669754,2 |
| | | | | | | | | | SE to fit | 4808920,1 |

Fig. 14

## PARTIAL EUROPEAN SEARCH REPORT

**European Patent Office**

which under Rule 45 of the European Patent Convention shall be considered, for the purposes of subsequent proceedings, as the European search report

**Application Number**

EP 02 01 9319

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | F.L. GREITZER ET AL: "Development of a Framework for Predicting Life of Mechanical Systems: Life Extension Analysis and Prognostics (LEAP)" INTERNATIONAL SOCIETY OF LOGISTIS 1999 SYMPOSIUM, 30 August 1999 (1999-08-30), - 2 September 1999 (1999-09-02) pages 1-7, XP002226152 LAS VEGAS, NEVADA, USA | 1-3,11 | G06F17/18 |
| Y | * page 4, line 5 - page 6, column 13 * | 6,7,9,10 | |
| A | * page 1, line 24 - page 3, line 24 * | 4,5 | |
| | ----- | | |
| | -/-- | | |

**TECHNICAL FIELDS SEARCHED (Int.Cl.7)**

G06F

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 18 July 2003 | Barba, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| ))) European Patent Office | INCOMPLETE SEARCH SHEET C | Application Number EP 02 01 9319 |

Claim(s) searched completely:
    1 2 3 4 5 6 7 9 10

Claim(s) not searched:
    8 11

Reason for the limitation of the search:

With regard to present claim 8 the following comments are submitted.

Present claim 8 relates to an extremely large number of possible methods. In fact, the claim contain so many options and possible permutations that a lack of clarity and conciseness within the meaning of Article 84 EPC arises to such an extent as to render a meaningful search of the claim impossible.

With regard to present claim 11 the following comments are sumbitted.

The wording "Use of the method" used in the present text of claim 11 is vague and unclear and does not allow to determine the category of the claim which is agaist the provisions of Article 84 EPC. The search division has interpreted the wording of claim 11 as directed to a method of operating an ethylene production plant, therefore as a method claim.

However, also when considering the above comment, in the view of the search division present claim 11 relates to an extremely large number of possible methods. In fact, the claim contains so many options and possible permutations that a lack of clarity and conciseness within the meaning of Article 84 EPC arises to such an extent as to render a meaningful search of the claim impossible.

**European Patent Office**

## PARTIAL EUROPEAN SEARCH REPORT

Application Number

EP 02 01 9319

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| X | NAZZAL D ET AL: "Evaluation of the effectiveness of group screening methods as compared to no group screening" SIMULATION CONFERENCE, 2000. PROCEEDINGS. WINTER ORLANDO, FL, USA 10-13 DEC. 2000, PISCATAWAY, NJ, USA,IEEE, US, 10 December 2000 (2000-12-10), pages 1499-1504, XP010529703 ISBN: 0-7803-6579-8 * page 1500, right-hand column, line 25 - page 1501, right-hand column, line 5 * | 1-3,11 | |
| A | * page 1499, left-hand column, line 1 - page 1500, left-hand column, line 34 * ----- | 4,5 | |
| X | "Reliability Prediction of Board-Mounted Power Modules" TYCO/ELECTRONICS TECHNICAL NOTE, [Online] July 1997 (1997-07), pages 1-6, XP002226153 Retrieved from the Internet: <URL:http://power.tycoelectronics.com> [retrieved on 2002-12-30] * page 3, line 7 - line 37 * | 1,2,11 | **TECHNICAL FIELDS SEARCHED** (Int.Cl.7) |
| A | * page 2, line 1 - line 22 * ----- | 3-5 | |
| X | LUKE S R ET AL: "Time meter estimation technique for naval equipment" RELIABILITY AND MAINTAINABILITY SYMPOSIUM, 1993. PROCEEDINGS., ANNUAL ATLANTA, GA, USA 26-28 JAN. 1993, NEW YORK, NY, USA,IEEE, US, 26 January 1993 (1993-01-26), pages 10-15, XP010110204 ISBN: 0-7803-0943-X | 1,2,11 | |
| A | * page 11, left-hand column, line 28 - page 12, right-hand column, line 3 * ----- | 3-5 | |

-/--

EPO FORM 1503 03.82 (P04C10)

**European Patent Office**

## PARTIAL EUROPEAN SEARCH REPORT

**Application Number**

EP 02 01 9319

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| Y | METTAS A ET AL: "System reliability analysis: the advantages of using analytical methods to analyze non-repairable systems" 2001 PROCEEDINGS OF THE ANNUAL RELIABILITY AND MAINTAINABILITY SYMPOSIUM. THE INTERNATIONAL SYMPOSIUM ON PRODUCT QUALITY AND INTEGRITY. RAMS. PHILADELPHIA, PA, JAN. 22 - 25, 2001, ANNUAL RELIABILITY AND MAINTAINABILITY SYMPOSIUM, NEW YORK, NY: IEEE,, 22 January 2001 (2001-01-22), pages 80-85, XP010531040 ISBN: 0-7803-6615-8 * page 80, left-hand column, line 1 - line 24 * * page 80, left-hand column, line 26 - page 81, left-hand column, line 29 * * page 81, right-hand column, line 1 - page 82, left-hand column, line 17 * ----- | 6,7,9,10 | |
| A | METTAS A: "Reliability allocation and optimization for complex systems" RELIABILITY AND MAINTAINABILITY SYMPOSIUM, 2000. ANNUAL LOS ANGELES, CA, USA 24-27 JAN. 2000, PISCATAWAY, NJ, USA,IEEE, US, 24 January 2000 (2000-01-24), pages 216-221, XP010367871 ISBN: 0-7803-5848-1 * page 216, left-hand column, line 28 - page 217, left-hand column, line 17 * * page 217, right-hand column, line 7 - page 218, left-hand column, line 26 * * page 218, right-hand column, line 12 - page 219, left-hand column, line 16 * * page 219, left-hand column, line 24 - page 221, left-hand column, line 33 * ----- | 6,7,9,10 | TECHNICAL FIELDS SEARCHED (Int.Cl.7) |
| | -/-- | | |

EPO FORM 1503 03.82 (P04C10)

**European Patent Office**

## PARTIAL EUROPEAN SEARCH REPORT

Application Number

EP 02 01 9319

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A | METTAS A ET AL: "Modeling & Analysis for Multiple Stress-Type Accelerated Life Data"<br>2002 PROCEEDINGS OF THE ANNUAL RELIABILITY AND MAINTAINABILITY SYMPOSIUM. THE INTERNATIONAL SYMPOSIUM ON PRODUCT QUALITY AND INTEGRITY. RAMS. SEATTLE, WA, JAN. 28 - 31, 2002, ANNUAL RELIABILITY AND MAINTAINABILITY SYMPOSIUM, NEW YORK, NY: IEEE, US, 28 January 2002 (2002-01-28), pages 343-348, XP010575849<br>ISBN: 0-7803-7348-0<br>* page 344, left-hand column, line 15 - page 346, left-hand column, line 21 *<br>----- | 6,7,9,10 | |
| A | Y.Z. FRIEDMAN: "Advanced Control of Ethylene Plants - What works, What doesn't and Why"<br>HYDROCARBON ASIA JULY/AUGUST 1999, July 1999 (1999-07), pages 1-14, XP002247259<br>* page 5, line 29 - page 6, line 12 *<br>* page 7, line 10 - line 15 *<br>* page 8, line 1 - page 9, line 5 *<br>* page 12, line 11 - page 13, line 33 *<br>----- | 6,7,9,10 | TECHNICAL FIELDS SEARCHED (Int.Cl.7) |

EPO FORM 1503 03.82 (P04C10)

EP 1 394 689 A1

European Patent
Office

Application Number

EP 02 01 9319

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

22

**European Patent Office** | **LACK OF UNITY OF INVENTION SHEET B** | Application Number

EP 02 01 9319

The Search Division considers that the present European patent application does not comply with the requirements of unity of Invention and relates to several inventions or groups of inventions, namely:

1. claims: 1-5, part of claim 11

    Method to determine the probable life of a piece of equipment in an industrial plant using multiple regression analysis to determine expected life of said piece.
    ---

2. claims: 6-10, part of claim 11

    Method for performing maintenance of an industrial plant, whereby operational data and design data of the industrial plant are fed into a system generating at least one value for an expected life of one piece of equipment of the industrial plant and whereby the piece of equipment is replaced when the actual life equates to the predicted life or a value derived from the predicted life.
    ---